# EUROPEAN PATENT APPLICATION

(11) **EP 1 254 755 A1**
(43) Date of publication of application: **06.11.2002**
(21) Application number: 01948958.2
(22) Date of filing: 01.02.2001
(51) Int. Cl.: B29C 47/14

(54) **FLAT DIE, AND MOLDINGS PRODUCING METHOD USING THE SAME**

(30) Priority: 02.02.2000 JP 2000024622; 24.02.2000 JP 2000047704
(71) Applicant: Fukumura, Mikio, Nara-shi, Nara 631-0031 (JP)
(72) Inventor: Fukumura, Mikio, Nara-shi, Nara 631-0031 (JP)
(74) Representative: Hucker, Charlotte Jane
(86) International application number: JP0100696
(87) International publication number: WO01056769

(57) **Abstract**

A flat die has an inlet (2) for supplying a molten resin from an extruder to the die therethrough, a hollow portion (3) so formed as to permit the molten resin supplied to spread in widthwise directions, and an outlet (7) for discharging the molten resin therethrough as spread in the widthwise directions, wherein an accommodating portion (12) and rotatable bodies (20,22) are formed between the hollow portion (3) and the outlet (7). Rotatable bodies (20,22) have an outer periphery substantially in the form of a true circle in cross section and substantially the same widthwise length as the outlet (7) and are rotatably disposed within the accommodating portion (12) with an axis thereof extending in the widthwise direction.

## Description

### TECHNICAL FIELD

The present invention relates to flat dies for forming films, sheets or the like of thermoplastic resin with use of an extruder, and also to a method of producing extruded articles using the flat die.

### BACKGROUND ART

Flat dies are generally used for forming flat films, sheets or thick platelike articles. With respect to the shapes of such dies, flat dies include fishtail dies, coathanger T-dies, straight manifold T-dies, etc. Coathanger T-dies include coathanger straight manifold dies having amanifold which extends from its center to an end while remaining unchanged in cross section, and coathanger tapered manifold dies wherein a hollow portion gradually diminishes in cross section as it extends from the center toward an end thereof. Dies of the latter type are widely used from the viewpoint of giving a uniform thickness to the film obtained over the entire width.

Many of flat dies are also provided with a part called a choker bar for controlling the flow of molten resin to make the resin flow uniform widthwise of the die. Flat dies are further generally provided with a lip clearance adjusting means for adjusting the thickness of the molten resin flowing out of the discharge outlet.

The conventional flat dies having the construction described above are designed based on the flow characteristics of the material resin and the pressure losses due to the flow to make the flow rate distribution of molten resin in the interior uniform widthwise of the die. In designing the die, it is required not only to measure and analyze complex the flow characteristics for each of different material resins but also to give the resin channel delicate configurations and dimensions. Accordingly, it is often likely that the die will not be made with sufficient accuracy, and extreme difficulties are encountered in fabricating a die of high performance by a single procedure. Consequently, it is common practice to make flat dies repeatedly by rial and error, and this entails problems with respect to time and production cost.

Further even if the flat die is obtained by such difficult design and production procedures, differences in the rate of extrusion, temperature and pressure of the extruder or in the kind of resin are likely to result in altered flow characteristics to impair the accuracy of thickness of the extruded product, so that the flat die needs to be replaced by another under different conditions, hence the problem of the lack of universal usefulness.

Since there is a need to alter the shape or thickness of the molten resin channel or to determine the molten resin temperature profile along the widthwise direction, the amount of shear acting on the molten resin varies along the widthwise direction, leading to the tendency for the product to have an altered molecular orientation or internal strain. As a result, the flat die has the problem that the thickness, density, mechanical characteristics, optical characteristics differ from product to product, or that the product warps or deforms.

The conventional flat die further has the problem that the choker bar or the lip adjusting means requires skillful adjusting work and is low in work efficiency. Although some dies are provided with an automatic lip clearance adjusting mechanism, such dies are very expensive.

The conventional flat dies also have the problem of producing great losses. Such losses are as follows. Since the shearing speed or amount of shear of molten resin decreases at the ends in the widthwise directions, or neck-in occurs, the thickness of the product is not fully adjustable widthwise thereof to produce "edge losses." Before the influence of heat generation due to shearing becomes stabilized to give the product a constant thickness, the operation involves an "adjustment loss." In the case where the product has a thickness greater than a minimum thickness to be assured, there occurs a "thickness assurance loss." Thus, improvements in efficiency have been required in manufacturing products.

An object of the present invention, which has been accomplished to overcome the above problems, is to provide a flat die which is capable of forming an extruded product of high quality with an improved efficiency, easy to design and fabricate and excellent in universal usefulness, and to provide also a method of producing a desired extruded product with use of the flat die.

### DISCLOSURE OF THE INVENTION

The foregoing object of the present invention can be fulfilled by a flat die having an inlet for supplying a molten resin from an extruder to the die therethrough, a hollow portion so formed as to permit the molten resin supplied to spread in widthwise directions, and an outlet for discharging the molten resin therethrough as spread in the widthwise directions, the flat die comprising an accommodating portion formed between the hollow portion and the outlet, and a rotatable body having an outer periphery substantially in the form of a true circle in cross section and substantially the same widthwise length as the outlet and rotatably disposed within the accommodating portion with an axis thereof extending in the widthwise direction.

Preferably, the flat die further comprises rotation adjusting means for adjustingly increasing or decreasing the speed of rotation or torque of the rotatably body. Preferably, the rotation adjusting means is coupled to the rotatable body for driving and/or braking the rotatable body. Alternatively, the rotation adjusting means preferably comprises pressure detecting means disposed in a channel for the molten resin and positioned upstream or downstream from the accommodating portion, and rotation control means for controlling the speed of rotation or torque of the rotatable body based on the result of detection by the pressure detecting means.

Preferably, the rotatable body is so disposed as to form between the outer peripheral surface thereof and the inner wall surface of the accommodating portion a clearance for the molten resin to pass therethrough. Preferably, two rotatable bodies are arranged side by side, with a clearance formed therebetween for the molten resin to pass therethrough. Alternatively, a clearance is preferably formed between the outer peripheral surface of each of the rotatable bodies and the inner wall surface of the accommodating portion for the molten resin to pass through the clearances dividedly.

It is desired that the rotatable body be provided with a piece projecting from the outer peripheral surface thereof diametrically outward. The projecting piece may be made movable outward from or into the rotatable body diametrically thereof. Alternatively, the rotatable body is preferably a member in the form of a roll and gives a shearing action to the molten resin with the outer peripheral surface thereof.

A flat die for forming a multiplicity of layers preferably comprises a plurality of channels for a molten resin supplied from an extruder to pass therethrough, at least one of the channels having a hollow portion so formed as to permit the molten resin supplied to spread in widthwise directions and an outlet for discharging the molten resin therethrough as spread in the widthwise directions. The flat die comprises an accommodating portion provided downstream from at least one said hollow portion, and a rotatable body having an outer periphery substantially in the form of a true circle in cross section and substantially the same widthwise length as the outlet and rotatably disposed within the accommodating portion with an axis thereof extending in the widthwise direction.

The foregoing object of the invention is further fulfilled by a method of producing an extruded article comprising a resin layer formed on a portion of a surface of a product of modified shape with use of the flat die described above.

A molten resin can be made into a sheet, film or plate with use of the flat die wherein the outlet is rectangular. Alternatively, a molten resin can be made into a product of a modified shape with use of the flat die wherein the outlet has the modified shape.

### BRIEF DESCRIPTION OF THE DRAWINGS

FIG. 1 is a front view in section of a flat die according to a first embodiment of the invention.
FIG. 2 is a side elevation in section of the flat die shown in FIG. 1.
FIG. 3 is a side elevation in section of a flat die according to a second embodiment of the invention.
FIG. 4 is a fragmentary view in section of a flat die according to another embodiment of the invention.
FIG. 5 is a fragmentary view in section of a flat die according to another embodiment of the invention.
FIG. 6 is a side elevation in section of a flat die according to a third embodiment of the invention.
FIG. 7 is a fragmentary view in section showing another embodiment of the portion C in FIG. 6.
FIG. 8 is a fragmentary view in section showing another embodiment of the portion C in FIG. 6.
FIG. 9 is a side elevation in section of a flat die according to a fourth embodiment of the invention.
FIG. 10 is a side elevation in section of a flat die according to a fifth embodiment of the invention.
FIG. 11 includes diagrams showing the configurations of discharge outlets of flat dies of the invention.
FIG. 12 is a side elevation in section of a flat die according to another embodiment of the invention.

### DETAILED DESCRIPTION OF THE INVENTION

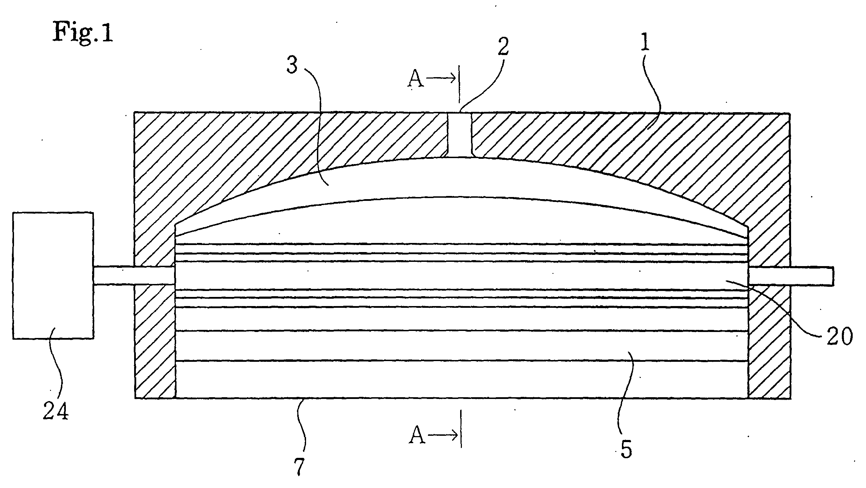

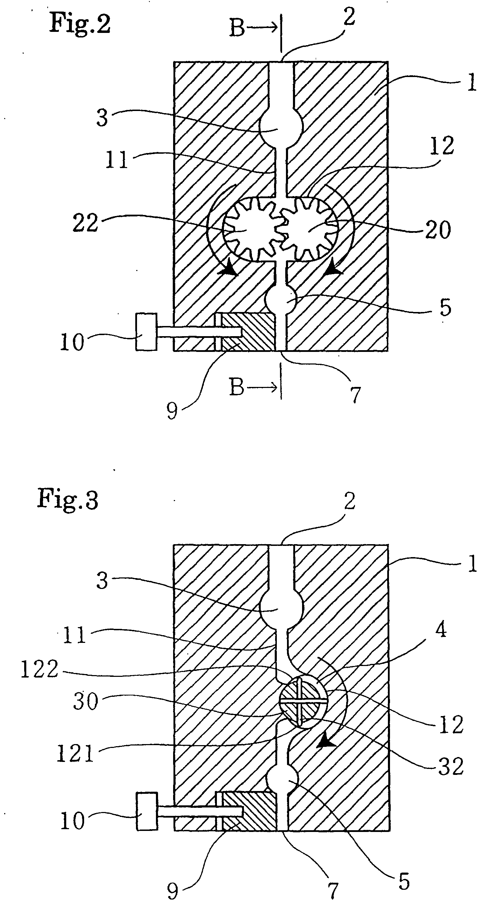

Embodiments of the present invention will be described below in detailed with reference to the accompanying drawings. FIG. 1 and FIG. 2 are respectively a front view in section and a side elevation in section showing a flat die according to a first embodiment of the invention. Incidentally, FIG. 1 is a view in section taken along the line B-B in FIG. 2, and FIG. 2 is a view in section taken along the line A-A in FIG. 1.

With reference to FIGS. 1 and 2, indicated at 1 is the body of the flat die, at 2 a resin inlet, at 3 an upstream hollow portion in the form of a coathanger, at 5 a straight downstream hollow portion, at 7 a rectangular outlet, at 9 a lip clearance adjusting block, and at 10 a lip clearance adjusting bolt. The hollow portions 3, 5 have a widthwise direction (longitudinal direction) which is parallel to the widthwise direction of the outlet 7. A temperature adjusting assembly for heating and cooling, and parts connecting means such as bolts are not shown.

The upstream hollow portion 3 is so formed as to cause a molten resin injected through the inlet 2 to flow dividedly widthwise. The molten resin passing through the upstream hollow portion 3 is discharged as spread widthwise from the outlet 7 via the downstream hollow portion 5.

The flat die according to the present embodiment has an accommodating portion 12 formed at an intermediate portion of a channel 11 for holding the hollow portions 3, 5 in communication with each other. A pair of roll gears 20, 22 serving as rotatable bodies are enclosed in the accommodating portion 12. The roll gears 20, 22 each have tooth crests and roots of teeth formed on respective concentric circles centered about the center of rotation. Thus, teeth in the form of projections are arranged equidistantly on the surface of a member having an outer periphery which is substantially in the form of a true circle in section. Unlike the gears for use in usual gear pumps, the roll gears 20, 22 are elongated members having a tooth width approximately equal to the widthwise length of the outlet 7, have respective axes extending widthwise of the outlet 7, are in mesh with each other, have tooth faces so arranged as to be perpendicular to the direction of flow of the molten resin and transport the molten resin in the directions of arrows when rotated. To be effective, the roll gears 20, 22 are given a widthwise length which is greater than the inside diameter of the cylinder of the extruder (not shown). To be practically useful, the length is preferably at least 30 cm, more preferably at least 50 cm.

One of the roll gears 20, 22 is coupled to a motor 24 which is rotation adjusting means. When one of the roll gears, 20, is rotated by the operation of the motor 24, the other roll rear 22 is driven by the gear 20.

Next, a description will be given of the operation of the flat die having the construction described. The roll gear 20 is first driven by the motor 24 at a predetermined speed or with a predetermined torque in the direction of the arrow of FIG. 2, and a molten resin is forced into the inlet 2 from the extruder (not shown). The molten resin supplied is caused to flow through the hollow portion 3 dividedly in widthwise directions and thereafter supplied to the accommodating portion 12. The molten resin moves between the teeth of the roll gears 20, 22 with the rotation and is discharged from the accommodating portion 12 at a constant flow rate.

Although some rotational drive force acts on the roll gears 20, 22 due to the flow of the molten resin supplied to the accommodating portion 12, one of the roll gears, 20, is coupled to the motor 24 and held at a constant speed of rotation Since the roll gears 20, 22 are thus braked by the motor 24, the molten resin has its flow suppressed and becomes easy to spread in the widthwise directions at an upstream position.

On the other hand, in the case where the molten resin has a high viscosity or when extrusion at a low temperature is required, the roll gears 20, 22 can be caused to function as a booster pump to lessen the burden on the extruder (not shown). It is therefore possible to reduce the quantity of heat generation of the molten resin and to make the molten resin uniform in temperature in the extruder, assuring the molten resin of a uniform flow rate distribution after flowing past the roll gears 20, 22.

After moving past the roll gears 20, 22 in any way, the molten resin flows, as made uniform in widthwise flow rate distribution, into the downstream hollow portion 5 and is discharged from the outlet 7 after being made to flow smoothly and rendered homogeneous. As a result, the molten resin is made into a sheet, film or plate having a uniform thickness widthwise thereof, with so-called "edge losses" diminished at its side edges.

Thus, the flat die according to the present embodiment is provided with the pair of roll gears 20, 22 and motor 24 to thereby permit the molten resin to smoothly flow dividedly in widthwise directions and to enable the extruded product to have high dimensional accuracy without necessitating the complex analysis conventionally required in designing the hollow portion 3. Accordingly, the hollow portion 3 can be readily designed and made in a desired configuration such as a straight form, tapered form or fan shape, in addition to the coathander type. Moreover, there is no need to make the molten resin channel thin and elongated for giving a great shearing force, or to widthwise varying the quantity of shear to be exerted on the molten resin as conventionally practiced. This makes it possible to readily obtain an extruded product which is reduced in molecular orientation and diminished in the variations of degree of orientation, further suppressing the heat generation of the molten resin due to shearing and ensuring favorable use of resins which are susceptible to thermal decomposition.

Although the pair of roll gears 20, 22 used in the present embodiment have the same diameter and cylindrical, the two gears may be different in diameter or may be in the form of cones in meshing engagement with each other. The teeth which extend straight may alternatively be oblique or in the form of screw threads.

The teeth are made constant in height in the widthwise direction according to the present embodiment to thereby permit the molten resin to be discharged from the outlet 7 at a constant flow rate from position to position in the widthwise direction, whereas the flow rate distribution of the molten resin can be altered as desired in the widthwise direction by varying the shape or height of the teeth periodically or inclining the teeth, whereby the extruded product is given a thickness which is altered in a striped pattern or tapered along the widthwise direction to obtain a sheet or plate of modified section with ease. Roll gears 20, 22 each of which differs in the height or shape of the teeth in the widthwise direction can be fabricated easily in this case by aligning a plurality of gears of different shapes in combination. A partition may be provided between divided gears.

The teeth of the roll gears 20, 22 may be provided over the entire width thereof and need not always be integral. Thus, the teeth may be divided into segments with respect to the widthwise direction, and such segments can be provided as shifted circumferentially of the gear.

The clearance between the inner peripheral surface of the accommodating portion and the tooth crests of the roll gears 20, 22 is preferably smaller from the viewpoint of giving a positive flow of high accuracy, while when enlarged to some extent, the clearance will diminish pressure variations or inhibit gear marks. For example in extruding a composition of high viscoelasticity, the clearance can be made approximately equal to the tooth depth of the gears 20, 22.

The roll gears 20, 22 can be involute, cycloid or circular-arc in tooth profile. The two gears may be symmetric or asymmetric in tooth profile. In order to inhibit gear marks due to pulsation, it is desired that the gears have such a tooth profile as to minimize variations in the flow rate of the resin squeezed out by the meshing roll gears 20, 22. The pulsation of the molten resin can also be diminished by holding the two gears out of tooth-to-tooth contact with each other and providing a small clearance between the opposed teeth of the two gears at all times. When the roll gears 20, 22, thus constructed to reduce the pulsation, fail to effect satisfactory power transmission therebetween, the roll gears 20, 22 can be held in operative relation by mounting gears anew on ends of the respective rotary shafts supporting the gears 20, 22 and causing the new gears to mesh with each other.

Although the roll gears 20, 22 and the accommodating portion 12 therefor according to the present embodiment are made to resemble known gear pumps as shown in FIG. 2, a solid cylindrical rotor may be provided for use as a rotatable body in place of the roll gears 20, 22 so that the arrangement may be similar in cross section to known pumps such as those of the vane type, two-leaved type or rotary fan type and mechanical booster (root type). Thus, a rotatable body is usable which has pieces projecting outward from the outer periphery thereof and is capable of forcing the molten resin toward the outlet 7 by rotation. Such a rotatable body can serve the same function as the roll gears 20, 22 described.

FIG. 3 is a side elevation in section showing a flat die which is according to a second embodiment of the invention and typical of such arrangements. This embodiment and the following embodiments correspond to the first embodiment which is shown in FIGS. 1 and 2 and in which the roll gears 20, 22 provided in the accommodating portion 12 are replaced by other rotatable body or bodies. With the exception of this feature, these embodiments are the same as the first embodiment. Accordingly, throughout the drawings, like parts are designated by like reference numerals and will not be described repeatedly.

The present embodiment has an elongated rotor 30 rotatably disposed within the accommodating portion 12 and having an axis positioned in the widthwise direction of the outlet 7. A clearance 4 serving as a channel for the molten resin is formed between the approximate half of the outer periphery of the rotor 30 and the inner surface of the accommodating portion 12.

The outer periphery of the rotor 30 is substantially in the form of a true circle in cross section. The rotor has two vanes 32 having a length in the substantially same widthwise direction as the outlet 7. At the center of the rotor 30, the vanes 32 intersect each other at right angles. The vanes 32 are movable diametrically of the rotor 30 independently of each other and partly project outward from the outer periphery of the rotor 30. The projecting portions serve as projecting pieces.

When the rotor 30 rotates in the direction of the arrow, one end of the vane 32 moves in sliding contact with the inner wall surface of the accommodating portion 12 while passing through the clearance 4, sending molten resin toward the outlet 7. After passing through the clearance 4, the vane end moves in sliding contact with a guide portion 121 and is thereby gradually retracted into the rotor 30, and the other end of the vane 32 alternatively projects outward gradually while moving in sliding contact with a guide portion 122, whereby the other end starts to force in the molten resin. Preferably, the clearance 4 is given a definite length in the diametrical direction, along the direction of rotation of the rotor 30, whereby the amount of molten resin to be forced in by the ends of the vane 32 becomes definite. This obviates variations in the flow rate of the molten resin to be discharged from the outlet 7.

The guide portions 121, 122 may be suitably provided at a plurality of locations along the length of the rotor 30, or may be provided each in a reticular form. The vane 32 can be composed of two divided segments and arranged diametrically of the rotor 30 with springs interposed therebetween. Instead of the interposed springs, a stator may be provided in the center of the rotor 30. The stator may be provided with eccentric engaging portions in engagement with hooks on end portions of the vane. This arrangement has the advantage that the guide portions 121, 122 need not be provided since the blade advances or retracts while rotating round the stator in engagement with the engaging portions.

Like the roll gears 20, 22 of the first embodiment shown in FIG. 2, two rotors 30, each having such a vane movable forward or backward diametrically of the rotor, may be provided side by side for the molten resin to pass between the two rotors. The two rotors are coupled by a motor or like rotation adjusting means and rotated in synchronism in opposite directions to the directions of arrows in FIG. 2, whereby the molten resin can be sent,forward at a constant rate by the action of the vanes. The moving molten resin is then free from the shearing force due to contact with the inner wall surface of the accommodating portion, so that this arrangement has the advantage of being greatly diminished in the quantity of sear of the molten resin and the quantity of heat generation thereof. A multiplicity of vanes can be arranged around each rotor as equidistantly spaced apart, while the vanes of the two rotors may be in or out of contact with each other. Furthermore, one of the rotors may be a roll having no vane.

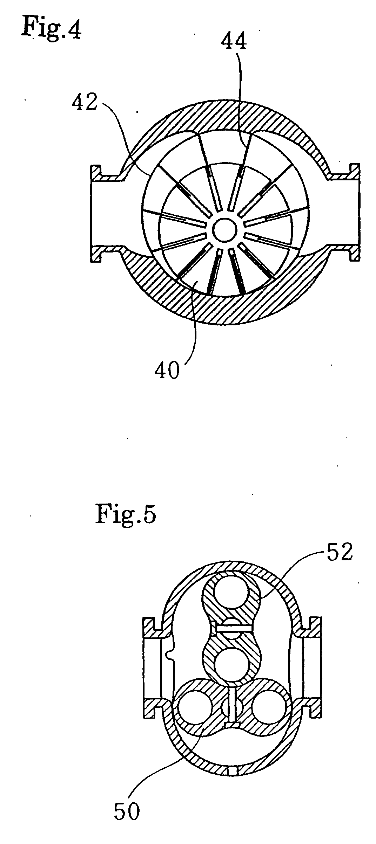

For reference, FIGS. 4 and 5 show other embodiments of vane-type or two-leaved pumps in section. FIG. 4 shows a rotor 40, a cylinder 42 and vanes 44 serving as projecting pieces. With reference to FIG. 5, indicated at 50, 52 are rotors which are rotatable in opposite directions to each other and which have opposite ends serving as projecting pieces. Attention should be directed to the fact that the rotors shown in FIGS. 4 and 5 are elongated rotors having lengths approximately in the same widthwise direction as the outlet 7.

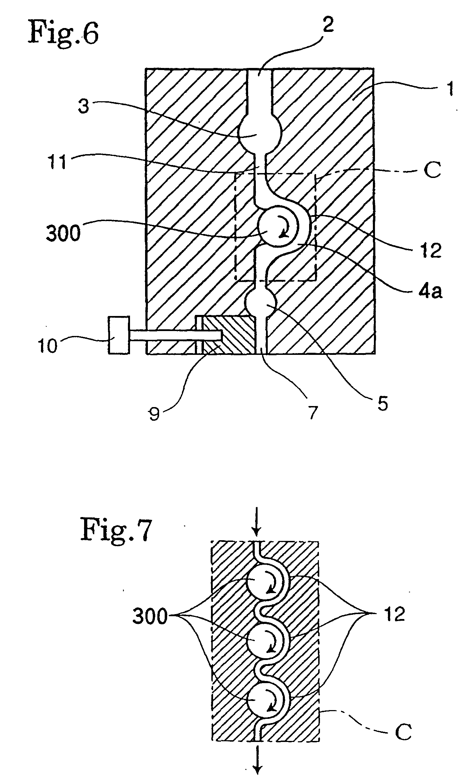

Nest, a description will be given of a flat die according to a third embodiment of the invention. FIG. 6 is a side elevation in section of the flat die according to the third embodiment of the invention.

With this embodiment, a hollow cylindrical roll 300 serving as a rotatable body is housed in the accommodating portion 12. The roll 300 has an outer periphery substantially in the form of a true circle in cross section, and is an elongated member having a surface length approximately equal to the widthwise length of the outlet 7. The roll has no projecting piece extending over the entire width unlike the foregoing first and second embodiments. The roll 300 has an axis extending along the widthwise direction of the outlet 7 and is so disposed that the outer peripheral surface thereof moves in sliding contact with part of the inner wall surface of the accommodating portion 12. The roll forms between the roll and other portion of the inner wall surface a clearance 4a serving as a channel for the molten resin.

It is effective that the surface length of the roll 300 be made greater than the inside diameter of the cylinder of the extruder (not shown). To be practically useful, the length is preferably at least 30 cm. The roll 300 is coupled to a motor 24 serving as rotation adjusting means and is thereby made rotatable at a predetermined speed.

The operation of the flat die described will be described next. The roll 300 is first driven at the predetermined speed in the direction of the arrow in FIG. 6 by the motor (not shown) coupled to the roll 300, a molten resin is forced into the inlet 2 from the extruder (not shown). The molten resin supplied is caused to flow through the hollow portion 3 dividedly in the widthwise directions and passes through the clearance 4. Although the extrusion pressure of the extruder causes the flow of resin to exert some rotational drive force on the roll 300, whereas the roll 300, which is coupled to the motor 24, is held at the predetermined speed of rotation. Stated more specifically, when the rotational drive force due to the extrusion pressure is great, the motor 24 brakes the roll 300, while if the rotational drive force is small, the motor 24 serves the function of driving the roll 300, maintaining the roll 300 at the predetermined speed of rotation at all times.

The molten resin in any widthwise portion of the clearance 4a is subjected to an almost uniform shearing action by the rotation of the roll 300, and is transported toward the outlet 7. To make the molten resin shearing speed and shearing amount as uniform as possible at any portion along the widthwise direction, it is desired to decrease the dimension of the clearance 4a (distance between the outer periphery of the roll 300 and the inner wall surface of the accommodating portion 12) insofar as no problem will arise from the heat generation due to the excessive shearing of the molten resin. It is also desirable to give a greater circumferential length to the clearance 4a as by using a roll 300 of large diameter. For example, the clearance 4a is 0.3 to 30 mm, and the roll 300 is 5 to 500 mm in diameter. After moving past the roll 300, the molten resin flows into the downstream hollow portion 5 with a uniform flow rate distribution in the widthwise direction, is made to flow smoothly and rendered homogeneous and is thereafter discharged from the rectangular outlet 7.

Conventionally the resin is made to flow through the upstream hollow portion 3 dividedly widthwise thereof by a back pressure afforded by the resistance of the molten resin passing through the channel 11 to thereby ensure a uniform flow rate distribution in the widthwise direction. This gives rise to the problem that the hollow portion 3 and the channel 11 need to have high accuracy with respect to the configuration and dimensions and that the resistance varies with different kinds of resins. According to the present embodiment, on the other hand, the rotation of the roll 300 assures a uniform shearing action and a uniform flow rate in the widthwise direction, so that the shapes and dimensions of the hollow portion 3 and the channel 11 involve a great degree of tolerance, permitting facilitated designing and fabrication. Furthermore, the speed of rotation and torque of the roll 300 are suitably adjusted in accordance with the kind of resin used, whereby the resistance to be offered to the molten resin during passage through the clearance 4a can be made constant to ensure a uniform flow rate distribution with ease. Either the upstream side or downstream side of the roll 300 may have a higher pressure.

The conventional flat dies are adapted to produce an extruded product of uniform thickness mainly by altering the shearing history from portion to portion along the widthwise direction. This gives rise to complex problems such as different amounts of heat generation and different viscosities, presenting extreme difficulties in designing the configurations while rendering the die fabricated deficient in universal usefulness. The present embodiment has overcome such problems, making it possible to design hollow portions 3 of the desired type such as those of the straight or fan type in addition to the coathanger type.

Although the roll 300 is hollow and cylindrical according to the present embodiment, the roll can be conical, while it is possible to give a different diameter only to a specified portion along the widthwise direction. When thus constructed, the roll makes it possible to produce articles of modified shape or altered thickness by varying the flow rate at the specified location along the widthwise direction. The same may be realized by forming surface irregularities on the inner wall of the accommodating portion 12 or by giving different dimensions to the clearance 4 along the widthwise direction.

The roll 300 may be provided by connecting a plurality of modules having different diameters. The accommodating portion 12 may be provided by inserting into the flat die body 1 a plurality of blocks as joined and having tubular inner spaces which differ in cross sectional area. Such modifications readily provide products which differ in thickness along the widthwise direction. A partition may be provided between the modules or blocks.

Further to adjust the temperature of the molten resin, especially to eliminate the heat due to shearing heat generation of the molten resin, it is desirable to form a passageway for passing a heat medium therethrough, around the accommodating portion 12 in the flat die body 1 or in the interior of the roll 300, or to provide a temperature adjusting unit comprising a heat pipe, electronic cooling element or the like.

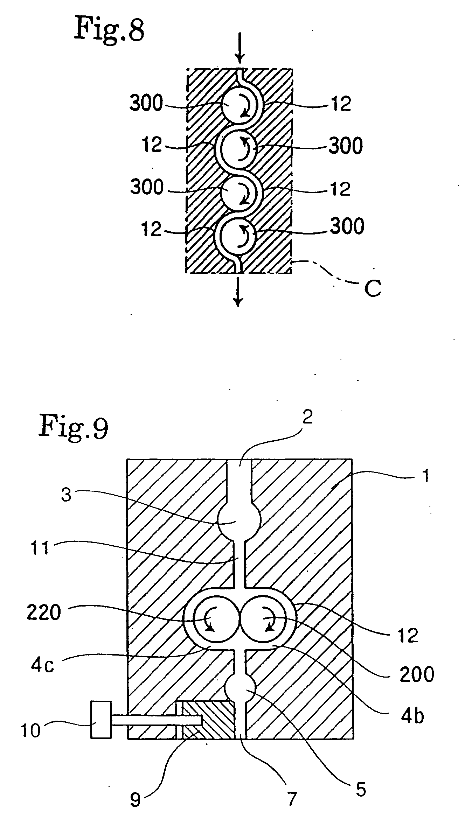

According to the present embodiment, the accommodating portion 12 and the roll 300 are each one in number, whereas a plurality of portions 12 and rolls 300 can be provided along the direction of flow of the molten resin as shown in FIGS. 7 and 8. In this case, the rolls 300 can be rotated in the same direction, with the outer peripheral surfaces of the rolls 300 adapted to contact the molten resin on the same side as seen in FIG. 7. Alternatively as shown in FIG. 8, the rolls 300, as arranged from the upstream side downstream, can be rotated alternately in opposite directions and have their outer peripheral surfaces brought into contact with the molten resin alternately on opposite sides. The arrangements shown in FIGS. 7 and 8 may be used in combination as desired. The flow of resin can be made uniform more reliably by such arrangements. The temperature of the molten resin can be more suitably adjusted on the front and rear sides by providing temperature adjusting units for the respective rolls 300.

Next, a flat die according to a fourth embodiment of the invention will be described. FIG. 9 is a side elevation in section of the flat die according to the fourth embodiment of the invention. The flat die of this embodiment comprises two hollow cylindrical rolls arranged in the accommodating portion 12.

With reference to FIG. 9, the two rolls 200, 220 each have an outer periphery which is substantially in the form of a true circle in cross section, and are each held in proximity or contact with each other, as arranged in the portion 12, with their axes extending in the widthwise direction of the outlet. Clearances 4b, 4c are formed between the inner wall surface of the accommodating portion 12 and the outer peripheral surfaces of the respective rolls 200, 220. The rolls 200, 220 are coupled respectively to two motors (not shown) included in rotation adjusting means. The rotation adjusting means rotates the rolls 200, 220 in the directions of the respective arrows (in directions opposite to each other) and controls the rotation of the rolls 200, 220 to speeds as timed with each other.

With the flat die of the above construction, the molten resin flowing into the accommodating portion 12 passes dividedly through the clearances 4b, 4c along the directions of rotation of the rolls 200, 220, then joins again and is thereafter discharged from the portion 12. In addition to the advantage of the flat die of the third embodiment described, this flat die further has the following advantage. The molten resin flowing through the clearances 4b, 4c is subjected to a shearing action by the rolls 200, 220, and then separated off the rolls 200, 220. The portions of resin positioned close to the outer peripheral surfaces of the rolls 200, 220 are therefore likely to vary in properties, but these resin portions of altered properties are drawn in when they join at the outlet of the accommodating portion 12, and are accordingly unlikely to appear on the opposite surfaces of the molten resin portion discharged from the outlet 7. Consequently, the extruded article can be made homogeneous with respect to gloss, surface roughness, etc. on both the front and rear sides. Even if the resin is rigid, the produce can be free of warping or deformation.

The two rolls may be different or the same in diameter. The accommodating portion 12 and the rolls 200, 220 can be so shaped as in the third embodiment described, and the temperature adjusting means may be suitably provided as in the case of the third embodiment. The rotation adjusting means (not shown) need not always hold the rolls 200, 220 at a timed speed, but may be individually provided for the rolls 200, 220 to suitably determine the speeds of the respective rolls. For example when the rolls 200, 220 are different in diameter, it is desirable to control the rotation of the two rolls 200, 220 so as to give equal peripheral speeds to the rolls. The rotation adjusting means may be coupled to only one of the rolls 200, 220, with the other roll allowed to rotate freely.

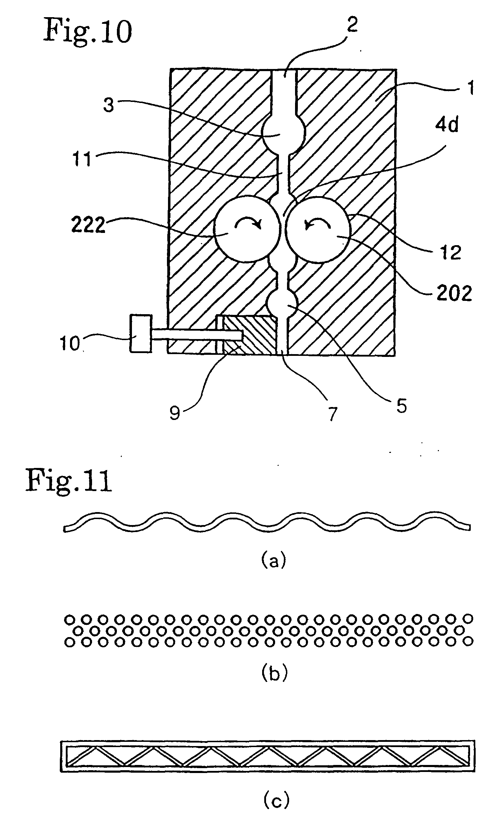

Next, a flat die according to a fifth embodiment of the invention will be described. FIG. 10 is a side elevation in section of the flat die according to the fifth embodiment of the invention. The flat die of this embodiment corresponds to the flat die of the fourth embodiment shown in FIG. 9 wherein the two rolls 200, 220 each have an outer periphery which is substantially in the form of a true circle in cross section, but instead of providing the clearances 4b, 4c inside the inner wall surface of the accommodating portion 12, a clearance 4d is formed between rolls 202, 222, which are rotated in directions opposite to those in the fourth embodiment.

With reference to FIG. 10, the two rolls 202, 222 are arranged in parallel to each other along the widthwise direction of the outlet 7, and are movable in sliding contact with part of the inner wall surface of the accommodating portion 12. The rolls are so arranged as to permit the molten resin to pass through the clearance 4d. The rolls 202, 222 are coupled respectively to two motors included in rotation adjusting means (not shown). The rotation adjusting means rotates the rolls 202, 222 in the directions of the respective arrows and controls the rotation of the rolls 202, 222 to speeds as timed with each other.

With the flat die thus constructed, the molten resin flowing into the accommodating portion 12 passes through the clearance 4d along the directions of rotation of the rolls 202, 222 and is then discharged from the portion 12. When the molten resin is to be run off from the outlet 7, resin portions which are altered in properties by the rolls 20, 22 are positioned on opposite sides, so that the extruded article can be made homogeneous on the front and rear sides thereof as is the case with the fourth embodiment. The modification of the third embodiment described are also usable for the present embodiment.

Although embodiments of the invention have been described above in detail, the specific mode of practicing the invention is of course not limited to these embodiments. For example, the speed of rotation of the rotatable body to be adjusted by the rotation adjusting means need not always be definite as in the foregoing embodiments but can be altered, for example, periodically to vary the thickness of the extruded product.

The rotation adjusting means in each of the foregoing embodiments may be operated by manual control as means independent of the operation of the extruder. Alternatively, the adjusting means may be operated as automatically related with the operation of the extruder. Especially in the former case, it is desirable to provide safety means such as a safety valve for relieving pressure in the event of an abnormal pressure buildup at a position upstream from the rotatable body, or an accumulator. In the latter case, it is desirable to provide a mechanism for relating the speed of rotation or torque of the motor with the speed of rotation of the extruder screw so as to maintain a specified pressure at a position upstream or downstream from the rotatable body. Alternatively, it is desirable to measure the pressure at a position upstream or downstream from the rotatable body to automatically control the speed of rotation of the rotation adjusting means or extruder screw. Incidentally, the extruded product take-up speed may be altered in accordance with the speed of rotation of the rotatable body.

A motor adapted to drive and brake the rotatable body is used for the rotation adjusting means in the foregoing embodiments. The motor is provided with an optional mechanism for adjusting the speed of rotation or drive force. Instead of this mechanism, a known brake device which is adapted only to brake the rotatable body may be provided. If the rotatable body can be braked to some extent by a frictional load thereon, the rotation adjusting means can be dispensed with.

In the case of the foregoing embodiments, the molten resin is likely to flow at a pulsating rate owing to pressure variations due to the rotation of the rotatable body, consequently producing gear marks or like striped marks on the surface of the extruded product. Accordingly it is desirable to provide at a position downstream from the rotatable body a mechanism for suppressing pressure variations. According to the present embodiment, the downstream hollow portion 5 is provided for increasing the thickness of the channel along the direction of flow of the molten resin. Conversely, a contrivance may be provided for reducing the thickness of the channel. Thus, occurrence of marks can be inhibited by providing between the accommodating portion 12 and the outlet 7 an adjusting portion for varying the thickness of a space along the direction of flow of the molten resin.

While the inlet 2 is formed in the upper surface of the flat die body 1 in the foregoing embodiments, the inlet may alternatively be provided in a side portion of the flat die body 1. The inlet 2 can then be formed simultaneously when the straight or tapered hollow portion is cut. This results in the advantage that the inlet is easy to make. The channel for holding the inlet 2 in communication with the hollow portion 3 need not always be positioned perpendicular to the surface but may be provided as inclined.

The downstream hollow portions 5 in the above embodiments serve the functions of making the flow of molten resin smooth, rendering the resin homogeneous to diminish flow marks (weld lines) or residual strain and adjusting die swell or the degree of orientation, whereas the portion 5 need not always be provided but can be dispensed with.

Although the outlet 7 is rectangular according to the present embodiment, the outlet may have a desired shape, such as (a) a wavy form, (b) an arrangement of a multiplicity of pores, and (c) a combination of triangular openings as shown in FIG. 11. Such outlets efficiently provide extruded products in the form of a wavy panel or a bundle of many strings, and articles of modified shapes such as corrugated sheets, corrugated hollow sheets and multiwall sheets, etc.

Although the lip clearance adjusting block 9 in the present embodiment is a member separate from the flat die body 1, the block may be in the form of a bend integral with the flat die body 1. The opening width of the outlet 7 is made manually adjustable by the lip clearance adjusting bolt 10 according to the foregoing embodiments, whereas the width may be made automatically adjustable by measuring the thickness of the product at specified points or at many points along the widthwise direction and feeding back the measurements. Further when required, a flat die can be provided using a restrictor (choker) for adjusting the flow of resin, deckle for adjusting the width, etc. in combination.

The extruder to be used with the foregoing embodiments may be any of a single-screw extruder, twin-screw extruder multiscrew extruder and rotary extruder. Such extruder may be of the vented type or nonvented type. Also usable is any device which is not called a usual extruder but is adapted to supply a fluid under pressure. Not only the extruder is usable singly but a plurality of extruders of the same kind or different kinds can be used as connected together in series or in parallel. In the case where a plurality of extruders are used, the same kind or different kinds of materials are co-extruded to obtain a plate of multilayer or modified section. The extruder can be provided with a suitable unit device such as a known gear pump or static mixer, or a blowing agent injector.

Examples of materials to be extruded by the flat die of the present invention are high-molecular-weight materials which melt when heated, such as thermoplastic resins, thermosetting resins before curing, rubbers before vulcanization, hotmelt adhesive compositions, etc. When a blowing agent, e.g., a so-called chemical blowing agent which evolves a gas, for example, when thermally decomposed, or so-called physical blowing agent such as a volatile gas, is mixed with the high-molecular-weight material in a molten state, an expanded body can be extruded. In the case where a molten resin is used which contains reinforcing fiber material incorporated therein, an article of reinforced resin can be extruded.

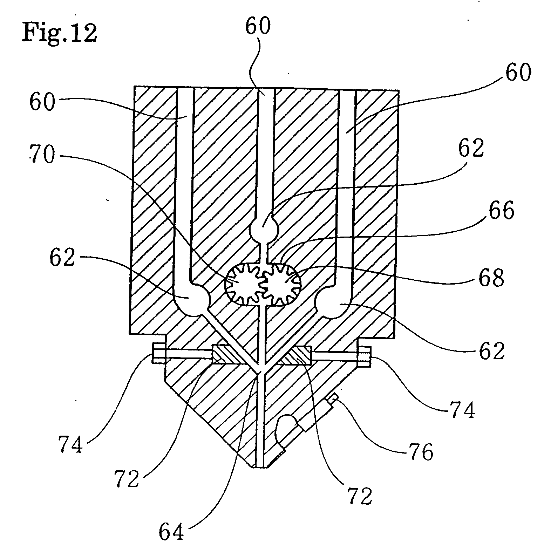

FIG. 12 shows a flat die for forming a multiplicity of layers wherein a plurality of channels 60 join at a confluence portion 64 via a manifold (hollow portions) 62. At least one of the channels 60 has an accommodating portion 66 and rotatable bodies 68, 70 between the manifold 62 and the confluence portion 64 for co-extrusion. The drawing shows restrictor bars (choker bars) 72, restrictor adjusting bolts 74, and a lip adjusting bolt 76.

Instead of causing molten resins for forming respective resin layers to join at the confluence portion 64 in this embodiment, some or all of the molten resins may be discharged from individual outlets and thereafter allowed to join. Instead of providing individual inlets, some or all of the inlets may be branched out in the interior of the mold. While such a multilayer flat die is useful for multilayer extrusion, this mode of extrusion can be practiced alternatively by using a multilayer feed block in combination with one of the foregoing embodiments.

By incorporating the construction of the desired one of the foregoing embodiments into a die for forming articles of modified cross section, a flat resin layer can be formed on a portion of the surface of the article of complex cross sectional shape. In this case, the flat resin layer may be joined to the other resin portion of modified cross section within the die, or the resins are discharged from individual outlets first and thereafter allowed to join. In this case, a plurality of inlets may be provided, or a single inlet may be provided in communication with branched resin channels in the interior of the die.

The material to be used for the foregoing embodiments can be selected from among those usually used for plastic forming dies. The outer periphery of the rotatable body or the wall of the accommodating portion 12 can be smooth-surfaced or rough-surfaced as desired. To control the adhesion of the die material with the molten resin, the surface of the die to be brought into contact with the molten resin can be coated with a fluorocarbon resin or ceramic, or plated or otherwise modified.

As will be apparent from the above description, the flat die of the invention has an accommodating portion formed between a hollow portion and an outlet, and a rotatable body disposed in the accommodating portion and having substantially the same widthwise length as the outlet and an axis extending in the widthwise direction. Accordingly, the molten resin supplied can be caused to smoothly flow dividedly in the widthwise direction, and can be made into an extruded product of high quality with a high efficiency, while the die is easy to design and fabricate and universally useful.

The rotation adjusting means provided for adjusting the speed of rotation or torque of the rotatable body gives a satisfactory flow rate distribution to the molten resin to be discharged from the outlet.

When two rotatable bodies are arranged side by side, with a clearance provided between the rotatable bodies or a clearance provided between each rotatable body and the inner wall surface of the accommodating portion for the molten resin to pass through, the extruded product can be given the same quality over the front and rear sides thereof regardless of the shape of the rotatable bodies, consequently rendering the product free from warping or deformation.

The method of forming extruded articles with use of the flat die described readily affords a film, sheet or plate having the desired thickness profile, or platelike extruded article of modified cross section.

## Claims

1. A flat die having an inlet for supplying a molten resin from an extruder to the die therethrough, a hollow portion so formed as to permit the molten resin supplied to spread in widthwise directions, and an outlet for discharging the molten resin therethrough as spread in the widthwise directions, the flat die being **characterized in that** the die comprises:
an accommodating portion formed between the hollow portion and the outlet, and
a rotatable body having an outer periphery substantially in the form of a true circle in cross section and substantially the same widthwise length as the outlet and rotatably disposed within the accommodating portion with an axis thereof extending in the widthwise direction.

2. A flat die according to claim 1 which is **characterized in that** the flat die further comprises rotation adjusting means for adjustingly increasing or decreasing the speed of rotation or torque of the rotatably body.

3. A flat die according to claim 2 which is **characterized in that** the rotation adjusting means is coupled to the rotatable body for driving and/or braking the rotatable body.

4. A flat die according to claim 2 which is **characterized in that** the rotation adjusting means comprises:
pressure detecting means disposed in a channel for the molten resin and positioned upstream or downstream from the accommodating portion, and
rotation control means for controlling the speed of rotation or torque of the rotatable body based on the result of detection by the pressure detecting means.

5. A flat die according to any one of claims 1 to 4 which is **characterized in that** the rotatable body is so disposed as to form between an outer peripheral surface thereof and an inner wall surface of the accommodating portion a clearance for the molten resin to pass therethrough.

6. A flat die according to any one of claims 1 to 4 which is **characterized in that** two rotatable bodies are arranged side by side, with a clearance formed therebetween for the molten resin to pass therethrough.

7. A flat die according to any one of claims 1 to 4 which is **characterized in that** two rotatable bodies are arranged side by side, a clearance being formed between an outer peripheral surface of each of the rotatable bodies and an inner wall surface of the accommodating portion for the molten resin to pass through the clearances dividedly.

8. A flat die according to any one of claims 1 to 7 which is **characterized in that** the rotatable body is provided with a piece projecting from an outer peripheral surface thereof diametrically outward.

9. A flat die according to claim 8 which is **characterized in that** the projecting piece is movable outward from or into the rotatable body diametrically thereof.

10. A flat die according to any one of claims 1 to 7 which is **characterized in that** the rotatable body is a member in the form of a roll and gives a shearing action to the molten resin with an outer peripheral surface thereof.

11. A flat die for forming a multiplicity of layers comprising a plurality of channels for a molten resin supplied from an extruder to pass therethrough, at least one of the channels having a hollow portion so formed as to permit the molten resin supplied to spread in widthwise directions and an outlet for discharging the molten resin therethrough as spread in the widthwise directions, the flat die being **characterized in that** the die comprises:
an accommodating portion provided downstream from at least one said hollow portion, and
a rotatable body having an outer periphery substantially in the form of a true circle in cross section and substantially the same widthwise length as the outlet and rotatably disposed within the accommodating portion with an axis thereof extending in the widthwise direction.

12. A method of producing an extruded article comprising a resin layer formed on a portion of a surface of a product of modified shape with use of a flat die according to any one of claims 1 to 11.

13. A method of producing an extruded article by forming a molten resin into a sheet, film or plate with use of a flat die according to any one of claims 1 to 11 wherein the outlet is rectangular.

14. A method of producing an extruded article by forming a molten resin into a product of a modified shape with use of a flat die according to any one of claims 1 to 11 wherein the outlet has the modified shape.
